Europäisches Patentamt

European Patent Office

Office européen des brevets

(11) Publication number: **0 347 178**
**A2**

## EUROPEAN PATENT APPLICATION

(21) Application number: 89305972.5

(22) Date of filing: 13.06.89

(51) Int. Cl.⁴ **G02F 1/133**

(30) Priority: 15.06.88 JP 147449/88
12.12.88 JP 313380/88
12.12.88 JP 313379/88
12.12.88 JP 313378/88

(43) Date of publication of application:
20.12.89 Bulletin 89/51

(84) Designated Contracting States:
**DE FR GB NL**

(71) Applicant: **Matsushita Electric Industrial Co.,
Ltd.
1006, Ohaza Kadoma
Kadoma-shi Osaka 571(JP)**

(72) Inventor: **Satani, Hiroshi
30-23, Miyukihigashimachi
Neyagawa-shi Osaka-fu 572(JP)**
Inventor: **Mochizuki, Hideaki
303, Tojuso Kitayama-cho 3-34,
Kitayama-cho
Tennoji-ku Osaka-shi Osaka-fu 543(JP)**
Inventor: **Tamura, Tooru
3-7-15 Asahioka
Ikeda-shi Osaka-fu 563(JP)**
Inventor: **Uemura, Tsuyoshi
41-26-ban Shigita
Higashiosaka-shi Osaka-fu 577(JP)**
Inventor: **Johten, Kazuhiro
18-26-28, Okayamate-cho
Hirakata-shi Osaka-fu 573(JP)**

(74) Representative: **Crawford, Andrew Birkby et al
A.A. THORNTON & CO. Northumberland
House 303-306 High Holborn
London WC1V 7LE(GB)**

(54) Orientation control film of liquid crystal molecule and liquid crystal element using it.

(57) In an orientation control coating comprising protein as a main component and a liquid crystal element using the orientation control coating, high grade orientation condition of liquid crystal molecules can be realized in good mass productivity and at low cost. Further, when the coating is applied to a ferroelectric liquid crystal element, both the ensured bistability of liquid crystal molecules and the uniform orientation condition can be realized in good mass productivity and at low cost.

FIG. 1

# ORIENTATION CONTROL FILM OF LIQUID CRYSTAL MOLECULE AND LIQUID CRYSTAL ELEMENT USING IT

The present invention relates to an orientation control film of liquid crystal molecule and a liquid crystal element using said orientation control film.

Recently, liquid crystal elements have come to be widely used in various fields such as for wrist watches, game machines, color television receivers, lap-top computers, and the like. As a result, the requirements for the high performance of the liquid crystal have been greatly enhanced. In order to meet such requirements, developments have been made on the high performance liquid crystal elements such as the liquid crystal elements using the active matrix system or super-twisted nematic liquid crystal system, or ferroelectric liquid crystal elements. As one of the important factors for determining the liquid crystal element, there is an orientation control technique. It is a technique for orientating the liquid crystal molecules in a certain direction over the whole surface of the element, on which the display quality largely depends. When the orientation control is unsatisfactory, fatal defects are induced such as unevenness of display, lowering in contrast, deterioration of performance with time, and the like. The importance of the orient-ation control technique applies commonly to each of the aforementioned high performance liquid crystal elements as well as to the conventional twisted nematic type liquid crystal elements. Rather, the orientation control technique has become a technique of higher importance.

Heretofore, as the method for controlling the orientation of the liquid crystal, there have been employed a method of rubbing (rubbing method) and a method cf depositing SiO or the like on the electrode surface in oblique direction thereto (oblique deposition method), of which the rubbing method, which is simple and low in cost, is principally adopted. However, in the present state where adoption of the large display size and the high density of the liquid crystal element has progressed, it has become difficult to obtain overall uniform, high quality display by simply rubbing the conventional orientation control film.

On the other hand, in Japanese Patent Publications (Unexamined) S62-291620 and S62-291621, Eguchi, et al. disclose as the orientation film the monomolecular membrane or monomolecular membrane accumulated membrane of a polymeric compound having a hydrophilic part and a hydrophobic part in common in a same one molecule. This method, however, has drawbacks such as requirement of time for forming film, poor mass productivity, and difficulty of reduction in cost.

In the ferroelectric liquid crystal element, there is proposed a liquid crystal element having a memory property by the surface stabilized ferroelectric liquid crystal element proposed by N. A. Clark, S. T. Lagerwall, et al. (U.S. Patent 4,367,924). In order to realize it, it is necessary for both the even orientation and the assurance of the bistability of the liquid crystal molecule to be satisfied in the actual element. However, it has been impossible to satisfy both sufficient bistability and even orientation by the conventional process of using the film coated with polyimide or the like and simply rubbing it. When an obliquely deposited film of SiO or the like is used as an orientation controlled film, it becomes possible to provide a high grade liquid crystal element satisfying both the assurance of bistability and the even orientation, but such method is poor in mass productivity and difficult to be operated in reduced cost.

By the way, as a characteristic of the ferroelectric liquid crystal element, there can be given a high speed response property. The response speed $\tau$ of a ferro-electric liquid crystal to the electric field is given by the equation: $\tau = \eta/Ps \cdot E$ where, $\eta$ is viscosity; Ps is spontaneous polarization, and E is applied electric field. Therefore, in order to realize a high response speed of an order of several $\mu$ sec., it is necessary to have a large spontaneous polarization.

Accordingly, the orientation of the ferroelectric liquid crystal involves specificity and difficulty of a degree beyond comparison· with the conventional method.

An object of the present invention is to realize an orientation condition of the liquid crystal molecules uniformly over the whole surface of the element and being free from defect. Another object is to obtain both the ascertainment of the bistability of the liquid crystal molecule and uniform orientation condition of the liquid crystal molecules in the ferroelectric liquid crystal element. A further object is to realise these factors in good mass-productivity and at low cost.

In order to attain the above objects, in the present invention, a coating comprising protein as a main component is applied to at least one of a pair of substrates forming an electrode layer. In forming said coating, a coating method to exert a shearing force to a certain direction, e.g., a pull coating method, is employed, by which an orientation control film is completed even without the provision of an orientation treatment. When a coating is formed by a coating method such as spin coating which does not exert the shearing force to a certain direction, the orientation control coating is

# EP 0 347 178 A2

completed by the provision of an orientation treatment such as rubbing. Further, when a coating method which exerts a shearing force to a certain direction is employed, an orientation treatment such as rubbing may be provided so as to improve the orientation further. A pair of substrates having the orientation control coating thus formed are held in opposite relation to each other through a spacer bonded to the side of the orientation control coating as mentioned above, and liquid crystal material is injected into a space formed between the opposed coatings and held therein. By such construction, the liquid crystal molecules held in the space between the opposed coatings are aligned.

By using a coating of the present invention comprising the protein as a main component, a thin and uniform orientation control coating can be realized. Further, when the above orientation control coating is employed, orientation condition of the liquid crystal molecules which is uniform over the whole surface of the element and is high in grade can be realized in good mass productivity and at low cost. Further, when it is applied to a ferroelectric liquid crystal element, satisfactory ferroelectric liquid crystal element with assurance of sufficient bistability can be realized in good mass productivity and at low cost for application to the liquid crystals having a large spontaneous polarization value (of at least 20 nC/cm$^2$) as well as those having a small spontaneous polarization value.

Fig. 1 is a lateral sectional view showing a schematic construction of the liquid crystal element according to the present invention;

Fig. 2 is a plan view showing a TN type liquid crystal cell obtained by the present invention; and

Fig. 3 is a plan view showing a ferroelectric liquid crystal cell obtained by the present invention.

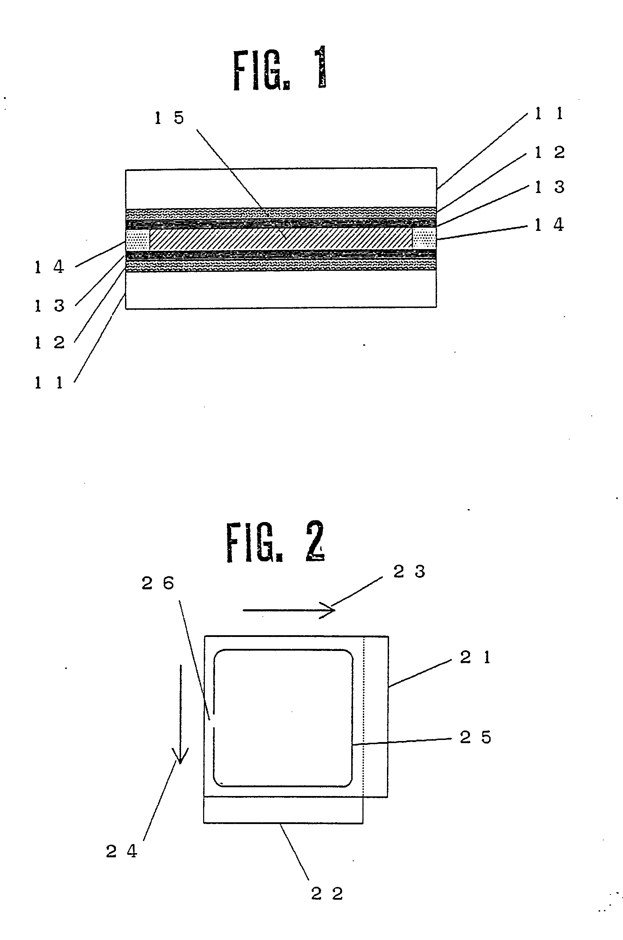

Hereinafter, an orientation control coating according to an embodiment of the present invention will be described with reference to the drawings. Fig. 1 is a lateral sectional view showing a schematic construction of the liquid crystal element using the orientation control coating according to the present invention. On a glass or plastic substrate 11, a transparent electrode (ITO electrode) layer 12 comprising indium·tin oxide is formed, on which a coating is formed using a solution comprising protein as a main component. As a method of forming the coating, various coating methods in industrial practice such as spin coat process, roll coat process, printing process, air knife coat process, etc. Especially, when coating is performed by a coating process which exerts the shearing force in one direction, e.g., a pull coating process, orientation of liquid crystal molecules is obtained even without specially providing an orientation treatment. In case the coating has been made by a coating method which does not exert the shearing force in one direction or when a further improvement to the orientation is desired, orientation treatment such as rubbing may be provided to make an orientation control coating 13. On the orientation control coating side of one substrate provided with an orientation control coating, a spacer & seal resin 14 made by dispersing in resin a cylindrical or spherical spacer comprising glass or plastic is allowed to remain only partly as an opening for injection of liquid crystal, and screen printing is performed. Two sheets of substrate are fixed together, and the spacer & seal resin 14 is cured, after which liquid crystal 15 is injected therein from the opening under reduced pressure, followed by sealing the opening with thermosetting or photocuring type resin to complete a so-called liquid crystal cell.

## Example A1 Group

Firstly, examples of application of the present invention to the twisted nematic (TN) type liquid crystal element not provided with rubbing treatment are described in more detail.

## Example A1

Bovine serum albumin (2.5 g) was dissolved in pure water (497.5 g) to prepare an aqueous bovin serum albumin solution of 0.5 % by weight. Then, to this aqueous solution, a glass substrate provided with pattern of ITO electrode was descended at the rate of 100 mm/min. in a perpendicular direction to the water surface. On immersion to the desired portion, the glass substrate was allowed to stand still for 10 seconds, after which it was pulled up at the rate of 10 mm/min. in the direction perpendicular to the water surface. The substrate which completed coating was dried in an electric furnace at 110°C for 1 hour to complete an orientation control coating. The coating thickness was about 100 A. Two glass substrates thus provided with a bovine serum albumin orientation control coating were made, and, as shown in Fig. 2, on the orientation control coating formed surface of one of the substrates (e.g., the lower substrate 22), acid anhydride curing type epoxy resin in which glass fiber of 7.0 μm in diameter was dispersed was printed on all the circumference in a width of 0.2 mm with an opening 26 of 5 mm in width at the middle part of the side of one side only left unprinted. Then, under the condition where the pulling up directions 23 and 24 at the time of forming the orientation control coatings formed on the upper substrate 21

3

and the lower substrate 22 were parallel to each other and the orientation control coating surfaces were opposed to each other, pressure was applied thereto, and these substrates were heated at 140°C for 5 hours to cause adhesion by curing. After the adhesion, liquid crystal (made by Merck, article name: ZLI3225) was injected from the opening 26 under reduced pressure. After the injection, the opening 26 was sealed with a commercialized acid anhydride curing type epoxy resin to complete a so-called TN type liquid crystal cell. Fig. 2 is a plan view showing the TN type liquid crystal cell, wherein the numeral 21 shows an upper substrate, 22 a lower substrate, 23 and 24 the respective pulling up directions, 25 a spacer & sealing resin, and 26 an opening. The completed TN type liquid crystal cell showed good orientation condition.

Example A2

Bovine serum albumin (25.0 g) was diluted with pure water (475.0 g) to prepare a bovine serum diluted solution of 5.0 % by weight. Using this solution, a bovine serum orientation control coating was prepared by the method shown in Example A1. Using the resulting coating, a TN type liquid crystal cell was prepared by the method shown in Example A1. The completed TN type liquid crystal cell showed good orientation condition, and gave good electrooptic characteristic.

Example A3

Ovalbumin (2.5 g) was dissolved in pure water (497.5 g) to prepare an aqueous ovalbumin solution of 0.5 % by weight. Using this aqueous solution, an ovalbumin orientation control coating was prepared by the method shown in Example A1. Using the resulting coating, a TN type liquid crystal cell was prepared by the method shown in Example A1. The completed TN type liquid crystal cell showed good orientation condition, and gave good electrooptic characteristic.

Example A4

Chymotrypsin (2.5 g) was dissolved in pure water (497.5 g) to prepare an aqueous chymotrypsin solution of 0.5 % by weight. Using this aqueous solution, a chymotrypsin orientation control coating was prepared by the method shown in Example A1. Using the resulting coating, a TN type liquid crystal cell was prepared by the method shown in Example A1. The completed TN type liquid crystal cell showed good orientation condition, and gave good electrooptic characteristic.

Example A5

Hemoglobin (2.5 g) was dissolved in pure water (497.5 g) to prepare an aqueous hemoglobin solution of 0.5 % by weight. Using this aqueous solution, a hemoglobin orientation control coating was prepared by the method shown in Example A1. Using the resulting coating, a TN type liquid crystal cell was prepared by the method shown in Example A1. The completed TN type liquid crystal cell showed good orientation condition, and gave good electrooptic characteristic.

Example B Group

Examples of application of the present invention to the twisted nematic (TN) type liquid crystal element provided with rubbing treatment are described in more detail.

Example B1

Bovine serum albumin (5.0 g) was dissolved in pure water (495.0 g) to prepare an aqueous bovin serum albumin solution of 1.0 % by weight. Then, this aqueous solution was spin coated on a glass substrate provided with pattern of ITO electrode at 2,000 r.p.m. for 1 minute. The substrate which completed coating was dried in an electric furnace at 110°C for 1 hour. The coating thickness was about 200 A. After the drying, the coating was subjected to rubbing treatment in a single direction to complete an orientation control coating. Two glass substrates thus provided with a bovine serum albumin orientation control coating were made, and, as shown in Fig. 2, on the orientation control coating formed surface of one of the substrates (e.g., the lower substrate 22), acid anhydride curing type epoxy resin in which glass fiber of 7.0 μm in diameter was dispersed, as a spacer & sealing resin 25, was printed on all the circumference in a width of 0.2 mm with an opening 26 of 5 mm in width at the middle part of the side of one side only left unprinted. Then, under the condition where the rubbing directions 23 and 24 of the orientation control coatings formed on the upper substrate 21 and the lower substrate 22 were perpendicular to each other and the orientation control coating surfaces were opposed to each other, pressure was applied thereto, and these substrates were heated at 140°C for 5 hours to cause adhesion by curing. After the adhesion, liquid crystal (made by Merck, article name: ZLI3225) was injected from the opening 26 under reduced pressure. After the injection, the opening 26 was sealed with a commercialized acid anhydride curing type epoxy resin to complete a so-called twisted nematic (TN) type liquid crystal cell. Fig. 2 is a plan view showing the TN type liquid crystal cell, wherein the numeral 21 shows an upper substrate, 22 a lower substrate, 23 and 24 the respective rubbing directions, 25 a spacer & sealing resin, and 26 an opening. The completed TN type liquid crystal cell showed good orientation condition free from unevenness of orientation.

## Example B2

Bovine serum albumin (25.0 g) was diluted with pure water (475.0 g) to prepare a bovine serum diluted solution of 5.0 % by weight. Using this solution, a bovine serum orientation control coating was prepared by the method shown in Example B1. Using the resulting coating, a TN type liquid crystal cell was prepared by the method shown in Example B1. The completed TN type liquid crystal cell showed good orientation condition free from unevenness of orientation, and gave good electrooptic characteristic.

## Example B3

Ovalbumin (5.0 g) was dissolved in pure water (495.0 g) to prepare an aqueous ovalbumin solution of 1.0 % by weight. Using this aqueous solution, an ovalbumin orientation control coating was prepared by the method shown in Example B1. Using the resulting coating, a TN type liquid crystal cell was prepared by the method shown in Example B1. The completed TN type liquid crystal cell showed good orientation condition free from unevenness of orientation, and gave good electrooptic characteristic.

## Example B4

Chymotrypsin (5.0 g) was dissolved in pure water (495.0 g) to prepare an aqueous chymotrypsin solution of 1.0 % by weight. Using this aqueous solution, a chymotrypsin orientation control coating was prepared by the method shown in Example B1. Using the resulting coating, a TN type liquid crystal cell was prepared by the method shown in Example B1. The completed TN type liquid crystal cell showed good orientation condition free from unevenness of orientation, and gave good electrooptic characteristic.

## Example B5

Hemoglobin (5.0 g) was dissolved in pure water (495.0 g) to prepare an aqueous hemoglobin solution of 1.0 % by weight. Using this solution, a hemoglobin orientation control coating was prepared by the method shown in Example B1. Using the resulting coating, a TN type liquid crystal cell was prepared by the method shown in Example B1. The completed TN type liquid crystal cell showed good orientation condition free from unevenness of orientation, and gave good electrooptic characteristic.

## Example C Group

Examples of application of the present invention to the ferroelectric liquid crystal element not provided with rubbing treatment are described in more detail.

## Example C1

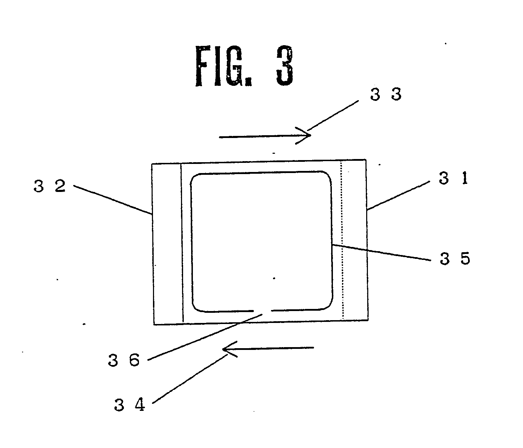

Bovine serum albumin (2.5 g) was dissolved in pure water (497.5 g) to prepare an aqueous bovin serum albumin solution of 0.5 % by weight. Then, to this aqueous solution, a glass substrate provided with pattern of ITO electrode was descended at the rate of 100 mm/min. in a perpendicular direction to the water surface. On immersion to the desired portion, the glass substrate was allowed to stand still for 10 seconds, after which it was pulled up at the rate of 10 mm/min. in the direction perpendicular to the water surface. The substrate which completed coating was dried in an electric furnace at 110°C for 1 hour to complete an orientation control coating. The coating thickness was about 100 A. Two glass substrates thus provided with a bovine serum albumin orientation control coating were made, and, as shown in Fig. 3, on the orientation control coating formed surface of one of the substrates (e.g., the lower substrate 32), acid anhydride curing type epoxy resin in which glass fiber of 2.0 μm in diameter was dispersed was printed on all the circumference in a width of 0.2 mm with an opening 36 of 5 mm in width at the middle part of the side of one side only left unprinted. Then, under the condition where the pulling up directions 33 and 34 at the time of forming the orientation control coatings formed on the upper substrate 31 and the lower substrate 32 were parallel to each other and the orientation control coating surfaces were opposed to each other, pressure was applied thereto, and these substrates were heated at 140°C for 5 hours to cause adhesion by curing. After the adhesion, liquid crystal showing ferroelectricity (made by Merck, article name: ZLI3654, spontaneous polarization Ps = 29 nC/cm²) was injected from the opening 36 under reduced pressure. After the injection, the opening 36 was sealed with a commercialized acid anhydride curing type epoxy resin. Further, the product was heated to a temperature at which the sealed in liquid crystal showed isotropicity, i.e., to a vicinity of 80° C, after which the temperature was gradually reduced to complete a so-called ferroelectric liquid crystal cell. Fig. 3 is a plan view showing the ferroelectric liquid crystal cell, wherein the numeral 31 shows an upper substrate, 32 a lower substrate, 33 and 34 the respective pulling up directions, 35 a spacer & sealing resin, and 36 an opening. The completed ferroelectric liquid crystal cell showed good orientation condition. By application of voltage, good electrooptic characteristic with assured bistability was obtained.

Example C2

Bovine serum albumin (25.0 g) was diluted with pure water (475.0 g) to prepare a bovine serum diluted solution of 5.0 % by weight. Using this solution, a bovine serum orientation control coating was prepared by the method shown in Example C1. Using the resulting coating, a ferroelectric liquid crystal cell was prepared by the method shown in Example C1. The completed ferroelectric liquid crystal cell showed good orientation condition, and, by application of voltage there was obtained good electrooptic characteristic with assurance of bistability.

Example C3

Ovalbumin (2.5 g) was dissolved in pure water (497.5 g) to prepare an aqueous ovalbumin solution of 0.5 % by weight. Using this solution, an ovalbumin orientation control coating was prepared by the method shown in Example C1. Using the resulting coating, a ferroelectric liquid crystal cell was prepared by the method shown in Example C1. The completed ferroelectric liquid crystal cell showed good orientation condition, and, by application of voltage there was obtained good electrooptic characteristic with assurance of bistability.

Example C4

Chymotrypsin (2.5 g) was dissolved in pure water (497.5 g) to prepare an aqueous chymotrypsin solution of 0.5 % by weight. Using this aqueous solution, a chymotrypsin orientation control coating was prepared by the method shown in Example C1. Using the resulting coating, a ferroelectric liquid crystal cell was prepared by the method shown in Example C1. The completed ferroelectric liquid crystal cell showed good orientation condition, and, by application of voltage there was obtained good electrooptic characteristic with assurance of bistability.

Example C5

Hemoglobin (2.5 g) was dissolved in pure water (497.5 g) to prepare an aqueous hemoglobin solution of 0.5 % by weight. Using this aqueous solution, a hemoglobin orientation control coating was prepared by· the method shown in Example C1. Using the resulting coating, a ferroelectric liquid crystal cell was prepared by the method shown in Example C1. The completed ferroelectric liquid crystal cell showed good orientation condition, and, by application of voltage there was obtained good electrooptic characteristic with assurance of bistability.

Example D Group

Examples of application of the present invention to the ferroelectric liquid crystal element provided with rubbing treatment are described in more detail.

Example D1

Bovine serum albumin (5.0 g) was dissolved in pure water (495.0 g) to prepare an aqueous bovin serum albumin solution of 1.0 % by weight. Then, this aqueous solution was spin coated on a glass substrate provided with pattern of ITO electrode at 2,000 r.p.m. for 1 minute. The substrate which completed coating was dried in an electric furnace at 110° C for 1 hour. The coating thickness was about 200 A. After the drying, the coating was subjected to rubbing treatment in a single direction to complete an orientation control coating. Two glass substrates thus provided with a bovine serum albumin orientation control coating were made, and, as shown in Fig. 3, on the orientation control coating formed surface of one of the substrates (e.g., the lower substrate 32), acid anhydride curing type epoxy resin in which glass fiber of 2.0 μm in diameter was dispersed, as a spacer & sealing resin 35, was printed on all the circumference in a width of 0.2 mm with an opening 36 of 5 mm in width at the middle part of the side of one side only left unprinted. Then, under the condition where the rubbing directions 33 and 34 of the orientation control coatings formed on the upper substrate 31 and the lower substrate 32 were perpendicular to each other and the orientation control coating surfaces were opposed to each other, pressure was applied thereto, and these substrates were heated at 140°C for 5 hours to cause adhesion by curing. After the adhesion, liquid crystal (made by Merck, article name: ZLI3654, spontaneous polarization Ps = 29 nC/cm²) was injected from the opening 36 under reduced pressure. After the injection, the opening 36 was sealed with a commercialized acid anhydride curing type epoxy resin. Further, the product was heated to a temperature at which the sealed in liquid crystal showed isotropicity, i.e., to a vicinity of 80°C, after which the temperature was gradually reduced to complete a so-called ferroelectric liquid crystal cell. Fig. 3 is a plan view showing the ferroelectric liquid crystal cell, wherein the numeral 31 shows an upper substrate, 32 a lower substrate, 33 and 34 the respective rubbing directions, 35 a spacer & sealing resin, and 36 an opening. The completed ferroelectric liquid crystal cell showed good orientation condition. By application of voltage, good electrooptic characteristic with assured bistability was obtained.

## Example D2

Bovine serum albumin (25.0 g) was diluted with pure water (475.0 g) to prepare a bovine serum diluted solution of 5.0 % by weight. Using this solution, a bovine serum orientation control coating was prepared by the method shown in Example D1. Using the resulting coating, a ferroelectric liquid crystal cell was prepared by the method shown in Example D1. The completed ferroelectric liquid crystal cell showed good orientation condition, and, by application of voltage there was obtained good electrooptic characteristic with assurance of bistability.

## Example D3

Ovalbumin (5.0 g) was dissolved in pure water (495.0 g) to prepare an aqueous ovalbumin solution of 1.0 % by weight. Using this aqueous solution, an ovalbumin orientation control coating was prepared by the method shown in Example D1. Using the resulting coating, a ferroelectric liquid crystal cell was prepared by the method shown in Example D1. The completed ferroelectric liquid crystal cell showed good orientation condition without irregularity of orientation, and, by application of voltage there was obtained good electrooptic characteristic with assurance of bistability.

## Example D4

Chymotrypsin (5.0 g) was dissolved in pure water (495.0 g) to prepare an aqueous chymotrypsin solution of 1.0 % by weight. Using this aqueous solution, a chymotrypsin orientation control coating was prepared by the method shown in Example D1. Using the resulting coating, a ferroelectric liquid crystal cell was prepared by the method shown in Example D1. The completed ferroelectric liquid crystal cell showed good orientation condition without irregularity of orientation, and, by application of voltage there was obtained good electrooptic characteristic with assurance of bistability.

## Example D5

Hemoglobin (5.0 g) was dissolved in pure water (495.0 g) to prepare an aqueous hemoglobin solution of 1.0 % by weight. Using this aqueous solution, a hemoglobin orientation control coating was prepared by the method shown in Example D1. Using the resulting coating, a ferroelectric liquid crystal cell was prepared by the method shown in Example D1. The completed ferroelectric liquid crystal cell showed good orientation condition without irregularity of orientation, and, by application of voltage there was obtained good electrooptic characteristic with assurance of bistability.

In this embodiment, as a method of forming the coating without rubbing treatment, description has been made using a dip coating process. However, any other coating process may be adopted insofar as it is a coating method in which a shearing force is applied in a certain direction. In such case, the direction corresponding to the pulling up direction is to be the direction in which the shearing force is applied. Also, in case of performing a rubbing treatment, the present invention process is applicable to all coating methods including dip coating process, printing process, etc. Further, the liquid crystals used for injection (article names: ZLI3225, ZLI3654 made by Merck) are not limited to them. With respect to the liquid crystal elements, description has been given on the TN type liquid crystal element and ferroelectric liquid crystal element only, but the present invention is effective for any other system of liquid crystal elements which necessitate the orientation control.

## Claims

1. An orientation control coating which comprises a coating comprising a protein as a main component on a substrate for controlling orientation of molecules adjacent to said coating by orientation of said coating.

2. The orientation control coating according to Claim 1, wherein said protein is water-soluble.

3. The orientation control coating according to Claim 2, wherein the water-soluble protein is albumin.

4. The orientation control coating according to Claim 1, wherein said protein is a protein contained in blood.

5. The orientation control coating according to Claim 4, wherein the protein contained in blood is a protein contained in serum.

6. The orientation control coating according to Claim 1, wherein the coating is provided with orientation treatment.

7. The orientation control coating according to Claim 6, wherein the orientation treatment is realized by rubbing a surface of the coating with another material.

8. The orientation control coating according to Claim 6, wherein the orientation treatment is performed simultaneously with the formation of coating.

9. The orientation control coating according to Claim 8, wherein the orientation treatment is realized by a shearing force at the time of coating.

10. The orientation control coating according to Claim 8, wherein the orientation treatment is realized by the pulling up coating process.

11. A liquid crystal element comprising a pair of substrates having respective electrode layers, opposing to each other, a liquid crystal layer sandwiched between the pair of electrodes, and a liquid crystal orientation control coating formed between at least one of said electrode layers and said liquid crystal layer, said liquid crystal orientation control coating being formed of a coating comprising a protein as a main component.

12. The liquid crystal element according to Claim 11, wherein said protein is water-soluble.

13. The liquid crystal element according to Claim 12, wherein the water-soluble protein is albumin.

14. The liquid crystal element according to Claim 11, wherein said protein is a protein contained in blood.

15. The liquid crystal element according to Claim 14, wherein the protein contained in blood is a protein contained in serum.

16. The liquid crystal element according to Claim 11, wherein the coating is provided with an orientation treatment.

17. The liquid crystal element according to Claim 16, wherein the orientation treatment is realized by rubbing a surface of the coating.

18. The liquid crystal element according to Claim 16, wherein the orientation treatment is performed simultaneously with formation of the coating.

19. The liquid crystal element according to Claim 18, wherein the orientation treatment is realized by a shearing force at the time of coating.

20. The liquid crystal element according to Claim 18, wherein the orientation treatment is realized by a pulling up coating process.

21. A liquid crystal element comprising a pair of substrates having respective electrode layers opposing to each other, a ferroelectric liquid crystal layer sandwiched between the pair of electrodes, and a liquid crystal orientation control coating formed between at least one of said electrode layers and said liquid crystal layer, said liquid crystal orientation control coating being formed of a coating comprising a protein as a main component and provided with an orientation treatment.

22. The liquid crystal element according to Claim 21, wherein said protein is water-soluble.

23. The liquid crystal element according to Claim 22, wherein the water-soluble protein is albumin.

24. The liquid crystal element according to Claim 21, wherein said protein is a protein contained in blood.

25. The liquid crystal element according to Claim 24, wherein the protein contained in blood is a protein contained in serum.

26. The liquid crystal element according to Claim 21, wherein the orientation treatment is realized by rubbing a surface of the coating.

27. The liquid crystal element according to Claim 21, wherein the orientation treatment is performed simultaneously with formation of the coating.

28. The liquid crystal element according to Claim 27, wherein the orientation treatment is realized by a shearing force at the time of coating.

29. The liquid crystal element according to Claim 27, wherein the orientation treatment is realized by a pulling up coating process.

# FIG. 1

# FIG. 2

# FIG. 3